# FASCICULE DE BREVET EUROPEEN

(11) **EP 4 247 660 B1**
(45) Date de publication et mention de la délivrance du brevet: **04.12.2024**
(21) Numéro de dépôt: 21794361.2
(22) Date de dépôt: 15.10.2021
(51) Int. Cl.: B60K 35/00, B60K 35/10, B60K 35/22, B60K 35/53, B60R 11/00, B60R 11/02, B60H 1/00, B60H 1/34

(54) **DISPOSITIF D'AFFICHAGE POUR VÉHICULE AUTOMOBILE**
ANZEIGEVORRICHTUNG FÜR EIN KRAFTFAHRZEUG
DISPLAY DEVICE FOR A MOTOR VEHICLE

(30) Priorité: 20.11.2020 FR 2011966
(43) Date de publication de la demande: 27.09.2023
(73) Titulaire: Renault s.a.s, 92100 Boulogne Billancourt (FR)
(72) Inventeur: CONFOLENT, Laurent, 78084 Guyancourt (FR); SENEZ, Michael, 78084 Guyancourt (FR)
(86) Numéro de dépôt international: PCT/EP2021/078693
(87) Numéro de publication internationale: WO 2022/106126

(56) Documents cités:
- DE-A1- 102014 006 289
- DE-A1- 102015 206 841
- DE-B4- 102014 006 289
- DE-U1- 202014 007 673
- US-A1- 2009 284 474

## Description

L'invention concerne un dispositif d'affichage pour véhicule automobile. L'invention porte aussi sur planche de bord comprenant un tel dispositif d'affichage. L'invention porte également sur un véhicule automobile comprenant une telle planche de bord.

L'augmentation de la taille des écrans centraux pour planche de bord fait émerger de nouvelles problématiques d'aménagement des véhicules automobiles. En effet, pour des raisons d'encombrement, il peut être difficile de concilier la présence d'aérateurs et celle d'un écran de grande dimension au centre de la planche de bord du véhicule.

Par ailleurs, les fonctions allouées à l'écran central étant de plus en plus importantes, son ergonomie doit évoluer pour en garantir de bonnes conditions d'usage. Une des problématiques concerne l'ergonomie visuelle de l'écran, qui peut être pénalisée par des reflets lumineux, ou par le masquage de l'écran par le volant du conducteur.

De plus, l'écran doit être utilisable à la fois dans un mode de conduite classique, et dans un mode de conduite autonome. Or dans le mode de conduite autonome, les sièges peuvent être reculés en limite de course arrière ou le dossier des sièges peut être abaissé, ce qui éloigne l'écran et gêne son utilisation.

Les dispositifs d'affichage de l'état de la technique sont décrits dans les documents DE 20 2014 007673 U1, DE 10 2014 006289 A1, DE 10 2015 206841 A1 et US 2009/284474 A1.

En outre, l'écran pouvant intégrer des fonctions récréatives, le partage de son usage entre le conducteur et le passager peut être gênant pour le conducteur.

Le but de l'invention est de fournir un dispositif d'affichage permettant de remédier aux inconvénients précédemment décrits. En particulier, l'invention permet de réaliser un dispositif qui soit simple et fiable et qui permette de concilier la présence d'un affichage de grande dimension et d'aérateurs centraux sur le tableau de bord, tout en s'adaptant à différents contextes d'utilisation, notamment à la conduite autonome et à l'usage partagé du dispositif d'affichage entre conducteur et passager.

A cet effet, l'invention porte sur un dispositif d'affichage pour une planche de bord d'un véhicule automobile comprenant deux écrans, notamment deux écrans tactiles, et un bloc central de forme parallélépipédique allongée selon la direction sensiblement verticale et de faible épaisseur le bloc central comprenant au moins un aérateur, les deux écrans se situant de part et d'autre du bloc central, chaque écran étant relié au bloc central par une liaison de type charnière permettant un premier mouvement de rotation entre l'écran et le bloc central.

Dans un mode de réalisation, le bloc central comprend une caméra.

Dans un mode de réalisation, le dispositif d'affichage comprend un deuxième élément de guidage selon un deuxième mouvement, de rotation selon une direction longitudinale du véhicule, de sorte à mettre en oeuvre deux formats d'affichage :
- un format paysage, dans lequel les écrans sont situés de part et d'autre d'un axe vertical, et
- un format portrait, dans lequel les écrans sont situés de part et d'autre d'un axe horizontal.

Dans un mode de réalisation, le dispositif d'affichage comprend un élément commandant un fonctionnement indépendant de chacun des écrans, lorsque le dispositif est mis en place en format paysage.

Dans un mode de réalisation, le dispositif d'affichage comprend un élément commandant l'affichage d'un clavier tactile sur l'écran inférieur permettant d'interagir avec l'écran supérieur, lorsque le dispositif est mis en place en format portrait.

Dans un mode de réalisation, le dispositif d'affichage comprend :
- un troisième élément de guidage selon un troisième mouvement de rotation selon une direction transversale du véhicule et/ou,
- un quatrième élément de guidage selon un quatrième mouvement de rotation selon une direction verticale du véhicule et/ou,
- un cinquième élément de guidage selon un cinquième mouvement de translation selon une direction longitudinale du véhicule.

Dans un mode de réalisation, l'amplitude du cinquième mouvement est telle qu'elle permet une utilisation du dispositif lorsque les sièges des utilisateurs du dispositif sont reculés en limite de course arrière, notamment ladite amplitude est au moins égale 100 millimètres, voire au moins égale à 150 millimètres.

Dans un mode de réalisation, les deux écrans tactiles sont de même taille.

L'invention porte aussi sur une planche de bord pour véhicule automobile comprenant un dispositif d'affichage selon l'invention.

L'invention porte également sur un véhicule automobile comprenant un dispositif d'affichage selon l'invention et/ou une planche de bord selon l'invention.

Le dessin annexé représente, à titre d'exemple, un mode de réalisation d'un dispositif d'affichage selon l'invention.
La figure 1 représente schématiquement un mode de réalisation d'un véhicule équipé d'un dispositif d'affichage.
La figure 2 représente un repère orthonormé associé à un véhicule automobile.
La figure 3 représente schématiquement une vue de face d'un mode de réalisation d'un dispositif d'affichage.
La figure 4 représente schématiquement une vue de dessus d'un mode de réalisation d'un dispositif d'affichage.
La figure 5 représente schématiquement une autre vue de dessus d'un mode de réalisation d'un dispositif d'affichage.
La figure 6 représente schématiquement une vue en perspective trois quart arrière d'un mode de réalisation d'un dispositif d'affichage.
La figure 7 représente schématiquement une vue de face d'un mode de réalisation d'un dispositif d'affichage comprenant deux aérateurs.
La figure 8 représente schématiquement une première vue en coupe d'un mode de réalisation d'un dispositif d'affichage comprenant deux aérateurs.
La figure 9 représente schématiquement une deuxième vue en coupe d'un mode de réalisation d'un dispositif d'affichage comprenant deux aérateurs.
La figure 10 représente schématiquement une vue de face d'un mode de réalisation d'un dispositif d'affichage comprenant un aérateur.
La figure 11 représente schématiquement une première vue en coupe d'un mode de réalisation d'un dispositif d'affichage comprenant un aérateur.
La figure 12 représente schématiquement une deuxième vue en coupe d'un mode de réalisation d'un dispositif d'affichage comprenant un aérateur.
La figure 13 représente schématiquement une vue de face d'un mode de réalisation d'un dispositif d'affichage dans un format portrait.
La figure 14 représente schématiquement une vue en coupe d'un mode de réalisation d'un dispositif d'affichage dans un format portrait.

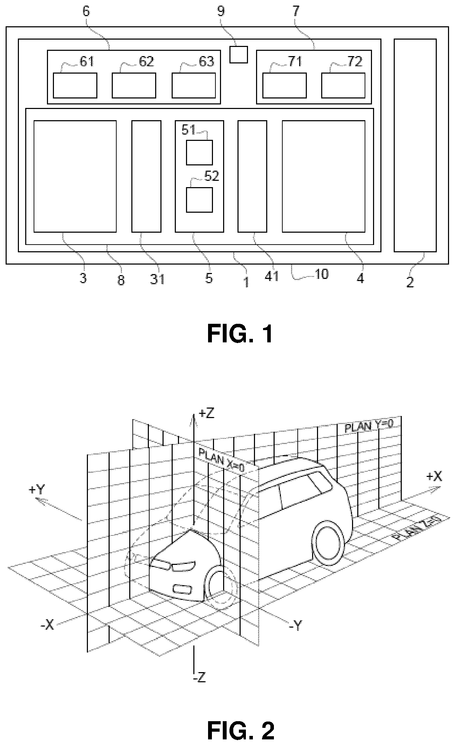

En référence à la figure 1, on décrit ci-après un véhicule automobile 10 équipé d'un dispositif d'affichage selon l'invention.

Le véhicule automobile 10 est un véhicule automobile de n'importe quel type, notamment un véhicule de tourisme ou un véhicule utilitaire. Le véhicule automobile peut être un véhicule autonome ou un véhicule non-autonome.

En référence à la figure 2, on définit un repère orthonormé utilisé dans la suite du document :
- L'axe dit axe longitudinal X du véhicule 10 est défini comme un axe de symétrie du véhicule parallèle à l'axe selon lequel le véhicule se déplace en ligne droite, orienté vers l'arrière du véhicule.
- L'axe dit axe latéral Y du véhicule 10 est perpendiculaire à l'axe longitudinal X déterminant avec l'axe X un plan XY parallèle à la surface sur laquelle le véhicule se déplace. L'axe latéral Y est orienté vers la droite du véhicule, la gauche et la droite étant définies selon le point de vue du conducteur.
- L'axe dit axe vertical Z du véhicule 10 est perpendiculaire aux axes X et Y et est orienté vers le haut du véhicule 10.

Le véhicule 10 comprend une planche de bord 2 et un dispositif d'affichage pour planche de bord 1.

Dans un mode de réalisation, la planche de bord 2 s'étend sur toute la dimension latérale du véhicule 10. La planche de bord est de préférence disposée sensiblement selon l'axe latéral Y du véhicule 10.

La planche de bord supporte le tableau de bord (lui-même constitué d'un ensemble d'indicateurs de conduite) ainsi qu'une variété d'accessoires destinés au confort et à la sécurité des passagers du véhicule automobile 10, parmi lesquels des aérations, des commandes de climatisation, des équipements audio, une boîte à gants, un airbag pour passager avant...

Dans le mode de réalisation décrit, la planche de bord 2 supporte également un dispositif d'affichage 1 selon l'invention.

Le dispositif d'affichage 1 comprend deux écrans 3, 4, notamment deux écrans tactiles, et un bloc central 5 comprenant au moins un aérateur 51. Les deux écrans se situent de part et d'autre du bloc central 5 et chaque écran 3, 4 est relié au bloc central 5 par une liaison de type charnière qui permet un premier mouvement RB de rotation entre l'écran 3, 4 et le bloc central 5.

Dans un mode de réalisation, les deux écrans 3, 4 sont de même taille. Alternativement, les deux écrans peuvent être de tailles différentes.

Le bloc central 5 comprend au moins un aérateur 51; avantageusement, le bloc central comprend au moins deux aérateurs.

Les aérateurs 51 permettent de diffuser de l'air dans l'habitacle du véhicule automobile 10. L'air diffusé peut provenir directement de l'air ambiant, ou provenir d'un système de chauffage ou d'un système de climatisation.

Le bloc central 5 peut également être pourvu d'une caméra 52, notamment d'une caméra de surveillance conducteur. La caméra 52 peut en particulier être destinée à l'équipement d'un véhicule autonome. La caméra 52 peut notamment être utilisée par des systèmes d'aide à la conduite, par exemple un système de surveillance de l'endormissement du conducteur.

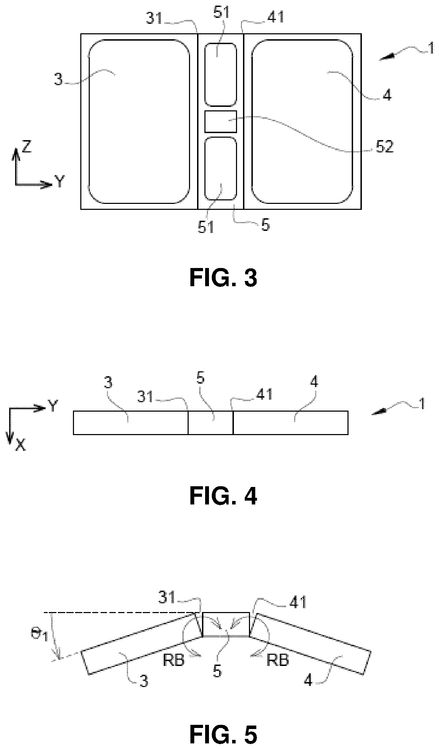

Dans une version préférentielle, plus spécifiquement représentée dans la figure 3, le bloc central 5 est de forme parallélépipédique allongée selon la direction sensiblement verticale Z et de faible épaisseur. Le bloc central 5 comprend deux aérateurs 51, répartis selon la plus grande dimension du bloc central, et une caméra 52, placée entre les deux aérateurs. Les aérateurs 51 sont alors situés l'un au-dessus de l'autre et encadrent la caméra 52.

Dans ce mode de réalisation, le bloc central 5 présente
- deux bords libres opposés situés en haut et en bas du bloc central 5, ces bords libres s'étendant sensiblement suivant la direction transversale Y, et
- deux bords dits rotatifs mettant en oeuvre chacun une liaison charnière 31, 41 avec un écran. Les bords rotatifs sont parallèles et sensiblement verticaux dans l'exemple illustrés à la figure 3.

Les deux écrans tactiles 3, 4 se situent de part et d'autre du bloc central 5, chaque écran 3, 4 étant relié au bloc central 5 par une liaison de type charnière 31, 41. Les écrans 3, 4 pivotent ainsi indépendamment l'un de l'autre autour d'un axe correspondant aux bords rotatifs du bloc central 5. Les liaisons charnières 31, 41 constituent ainsi un premier élément de guidage du dispositif d'affichage, permettant de mettre en oeuvre un premier mouvement de rotation RB entre chacun des écrans 3, 4 et le bloc central 5. Dans l'exemple illustré à la figure 3, les écrans tactiles 3, 4 sont disposés de part et d'autre du bloc central 5 de façon à présenter globalement un format d'affichage « paysage ».

En référence aux figures 3, 4 et 5, chaque liaison charnière 31, 41 permet une rotation indépendante de l'écran 3, 4 par rapport au bloc 5, la valeur θ1 de l'angle de rotation étant située entre une première valeur minimale θ1min et une première valeur maximale θ1ₘₐₓ.

Dans un mode de réalisation préférentiel, la première valeur minimale θ1ₘᵢₙ de l'angle de rotation θ1ₘᵢₙ est 0°. Autrement dit, les écrans 3, 4 peuvent se situer dans le même plan que le bloc central 5.

Dans un mode de réalisation, la première valeur maximale θ1ₘₐₓ peut être de 45°, voire 90°. Alternativement, la première val eur maximale θ1ₘₐₓ peut être plus faible, par exemple 10°, notamment la pre mière valeur maximale θ1ₘₐₓ peut dépendre du format d'affichage choisi, comme cela est décrit dans la suite du document.

Avantageusement, les liaisons charnières permettent de maintenir l'angle Θ1 dans la position choisie par l'utilisateur. Par exemple, elles présentent une résistance à la rotation à la fois suffisamment faible pour permettre la rotation manuelle de l'écran par un utilisateur, et suffisamment forte pour maintenir passivement l'angle de rotation Θ1 choisi, dans des conditions normales de conduite du véhicule automobile. En particulier, dans certains modes de réalisation, la résistance à la rotation doit être suffisante pour maintenir l'angle de rotation Θ1 choisi tout en permettant un appui stable sur l'écran pour un usage tactile (éventuellement l'usage d'un clavier tactile). Dans un mode de réalisation, chaque liaison charnière 31, 41 pourrait contenir des crans permettant de maintenir l'écran selon un angle Θ1 sélectionné parmi un ensemble d'angles prédéfinis constituant une indexation d'un ensemble de positions angulaires discrètes.

Dans un autre mode de réalisation de l'invention, chaque liaison charnière est verrouillée par un dispositif de blocage déverrouillable manuellement, par exemple un bouton poussoir (non représenté). Ce bouton poussoir est relié à un frein qui agit sur la liaison charnière sous l'influence de moyens de rappel pour empêcher toute rotation. A l'inverse une action manuelle sur le bouton poussoir à l'encontre des moyens de rappel libère la liaison charnière ce qui permet de pivoter les écrans comme souhaité.

Le dispositif d'affichage 1 comprend en outre un élément 9 permettant de commander les écrans 3, 4 selon le format d'affichage choisi par l'utilisateur.

Notamment l'élément 9 permet
- de commander un fonctionnement indépendant de chacun des écrans 3, 4, lorsque le dispositif est mis en place en format paysage comme illustré à la figure 3, et
- de commander l'affichage d'un clavier tactile sur l'écran inférieur 3, 4 permettant d'interagir avec l'écran supérieur 3, 4, lorsque le dispositif est mis en place en format portrait, c'est-à-dire lorsque l'ensemble formé par le bloc central 5 et les écrans 3, 4 est pivoté à 90°, les écrans 3, 4 étant alors disposés l'un au-dessus de l'autre en encadrant le bloc central 5 dont les bords rotatifs s'étendent alors sensiblement suivant la direction transversale Y.

Un mode de réalisation de l'élément 9 peut comprendre un interrupteur actionné manuellement par l'utilisateur pour passer d'un mode de commande d'affichage à un autre. Alternativement ou en complément, l'élément 9 peut comprendre un capteur mécanique et/ou gyroscopique détectant automatiquement le format d'affichage choisi par l'utilisateur.

Dans la suite du document, le terme « panneau » ou « panneau central » est utilisé pour désigner l'ensemble constitué par le bloc central 5 et les deux écrans 3, 4.

L'élément 9 peut faire partie du panneau ; alternativement l'élément 9 peut être extérieur au panneau central.

Outre les éléments précédemment décrits, le dispositif d'affichage 1 comprend
- un mécanisme de fixation 6 permettant de fixer le panneau 8 à la planche de bord 2,
- une connectique 7 comprenant des câblages d'alimentation électrique 71 du panneau 8, ainsi que
- des conduites 72 acheminant de l'air jusqu'aux aérateurs 51 du panneau central 8. La connectique est apte à permettre des mouvements de translation et de rotation du panneau central tels qu'ils sont décrits dans la suite du document.

Le mécanisme de fixation 6 peut fournir un ou plusieurs éléments de guidage supplémentaires, parmi lesquels :
- un deuxième élément de guidage du panneau 8 selon un deuxième mouvement RX de rotation selon l'axe longitudinal X du véhicule 10,
- un troisième élément de guidage du panneau 8 selon un troisième mouvement RY de rotation selon l'axe latéral Y du véhicule 10,

- un quatrième élément de guidage du panneau 8 selon un quatrième mouvement RZ de rotation selon l'axe vertical Z du véhicule 10,
- un cinquième élément de guidage du panneau 8 selon un cinquième mouvement TX de translation selon l'axe longitudinal X du véhicule 10.

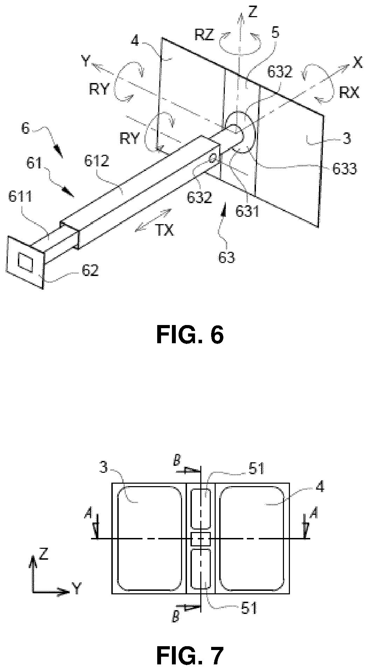

Un mode de réalisation du mécanisme de fixation 6 mettant en oeuvre ces cinq éléments de guidage est présenté ci-après en référence à la figure 6.

Le mécanisme de fixation 6 comprend un pied 61, correspondant à une portion allongée du mécanisme. Notamment, le mécanisme de fixation 6 peut comprendre un pied 61 pourvu de deux tubes creux 611, 612 un premier tube 611 étant de section inférieure à un deuxième tube 612, de sorte à permettre un mouvement de coulissement du premier tube 611, nommé tube intérieur, dans le deuxième tube 612, nommé tube extérieur.

La section du premier tube 611 est sensiblement de même forme que celle du deuxième tube 612, tout en étant plus légèrement plus petite. Les deux tubes peuvent être de section ronde, ou rectangulaire, ou toute autre forme permettant un coulissement du premier tube dans le deuxième tube.

Le mécanisme de fixation 6 comprend par ailleurs au moins deux dispositifs de fixation 62, 63 placés aux extrémités du pied 61.

Les dispositifs de fixation 62, 63 se situent respectivement à l'extrémité libre du premier et du deuxième tube 611, 612. Pour chaque tube l'extrémité libre correspond à son extrémité ne participant pas au coulissement.

Le premier dispositif de fixation 62 est destiné à fixer la traverse de la planche de bord 2 au pied 61.

Le deuxième dispositif de fixation 63 est destinée à fixer le pied 61 au panneau 8, plus spécifiquement au bloc central 5 du panneau.

Ainsi, les premier et deuxième dispositifs de fixation 62, 63 collaborent de sorte à permettre la fixation du panneau central 8 à la planche de bord 2. Avantageusement, le premier dispositif de fixation 62 est défini de sorte à disposer le pied 61 sensiblement selon l'axe longitudinal X.

Ce mode de réalisation permet ainsi la mise en oeuvre du cinquième élément de guidage TX, les tubes intérieur et extérieur 611, 612 permettant une translation TX selon l'axe longitudinal X, via une liaison télescopique. Le mouvement de translation TX permet de rapprocher l'écran des utilisateurs, notamment dans une configuration de conduite autonome où les sièges des utilisateurs peuvent être reculés en limite de course arrière.

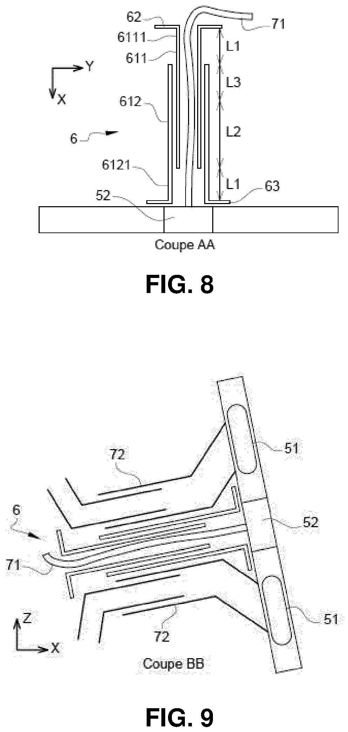

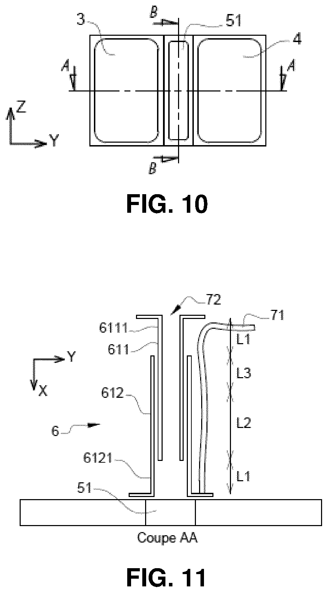

Les figures 8 et 11 décrivent le dimensionnement d'un mode de réalisation du cinquième élément de guidage TX.

Dans ce mode de réalisation, lorsque la liaison télescopique est totalement rétractée,
- une portion dite réservée 6111 du tube intérieur n'est pas couverte par le tube extérieur, ladite portion réservée 6111 étant située du côté de l'extrémité libre du tube intérieur, et
- une portion dite réservée 6121 du tube extérieur ne contient pas le tube intérieur, ladite portion réservée 6121 étant située du côté de l'extrémité libre du tube extérieur.

Les portions réservées 6111, 6121 des tubes intérieur et extérieur permettent la mise en oeuvre des dispositifs de fixation 62, 63, et éventuellement d'autres aménagements techniques.

Dans le mode de réalisation représenté sur la figure 6, la longueur des tubes intérieur et extérieur 611, 612 est calculée en fonction de :
- la longueur L1 d'une portion réservée 6111, 6121, par exemple 20 millimètres,
- l'amplitude L2 du mouvement de translation TX du tube intérieur dans le tube extérieur, par exemple 100 millimètres, voire 150 millimètres,
- une longueur L3 de sécurité permettant une rétractation du dispositif en cas de choc frontal du véhicule automobile, cette longueur pouvant être 50 millimètres.

Dans un premier mode de réalisation représenté dans les figures 7, 8 et 9, le bloc central 5 comprend deux aérateurs 51 et une caméra 52. Les tubes creux 611, 612 procurent un passage pour les câblages électriques 71. Les conduites 72 acheminant l'air vers les aérateurs 51 sont disposées de part et d'autre du pied 61. Dans ce mode de réalisation, les conduites 72 sont aptes s'étirer de la même longueur L2 que le pied 61.

Dans un deuxième mode de réalisation représenté dans les figures 10, 11 et 12, le bloc central 5 comprend un seul grand aérateur central et ne comprend pas de caméra 52. Les tubes creux 611, 612 jouent le rôle de conduite 72 acheminant l'air vers l'aérateur avantageusement disposé en face du pied 61. Les câblages électriques sont alors disposés à l'extérieur des tubes, éventuellement disposés le long des tubes.

En référence à la figure 6, une première liaison pivot 631 peut également être intégrée au deuxième dispositif de fixation 63, situé entre le pied 61 et le bloc central 5. La première liaison pivot 631 permet au panneau 8 d'effectuer un mouvement de rotation RX selon l'axe longitudinal X, mettant ainsi en oeuvre le deuxième élément de guidage du dispositif d'affichage.

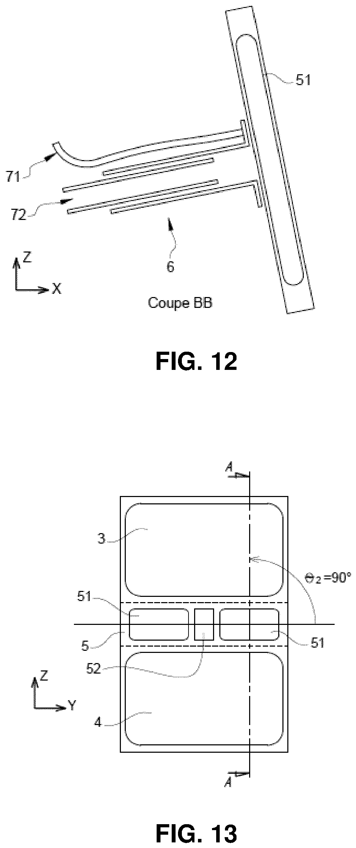

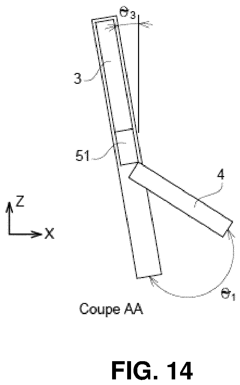

Grâce au mouvement de rotation RX, du panneau central 8 par rapport à l'axe X, le dispositif d'affichage 1 met en oeuvre au moins deux formats d'affichage :
- un format paysage (représenté de face sur les figures 3, 7 et 10), dans lequel les écrans (3, 4) sont situés de part et d'autre d'un axe vertical,
- un format portrait, (représenté de face sur la figure 13 et de profil sur la figure 14), dans lequel les écrans (3, 4) sont situés de part et d'autre d'un axe horizontal.

Afin de privilégier un positionnement du dispositif selon ces deux formats, l'angle de rotation θ2 du panneau central 8 par rapport à l'axe X prend préférentiellement trois valeurs : 0°, 90° ou -90°. Ces trois valeurs préférentielles peuvent être matérialisées par des crans. Alternativement ou en complément le mouvement de rotation RX peut être limité selon une amplitude de -90°à 90°.

En complément ou alternativement, une deuxième liaison pivot 632 peut être intégrée au deuxième dispositif de fixation 63, situé entre le pied 61 et le bloc central 5. La deuxième liaison pivot 632 permet au panneau central d'effectuer un mouvement de rotation RY selon l'axe transversal Y, mettant ainsi en oeuvre le troisième élément de guidage du dispositif d'affichage. Le mouvement de rotation RY permet de modifier l'inclinaison du panneau central 8, de préférence pour orienter légèrement le panneau central 8 vers le haut de l'habitacle du véhicule automobile, afin qu'un utilisateur puisse adapter l'inclinaison du panneau central 8 à un angle visuel souhaité. L'angle de rotation θ3 du panneau central 8 par rapport à l'axe Y est avantageusement situé entre 0°et 30°. Préférentiel lement il peut se situer autour de 20°. En variante l'angle θ3 pourrait prendre des valeurs négatives.

En complément ou alternativement, une troisième liaison pivot 633 peut être intégrée au deuxième dispositif de fixation 63, situé entre le pied 61 et le bloc central 5. La troisième liaison pivot 633 permet au panneau central d'effectuer un mouvement de rotation RZ selon l'axe vertical Z, mettant ainsi en oeuvre le quatrième élément de guidage du dispositif d'affichage. Le mouvement de rotation RZ permet d'orienter le panneau central 8 vers l'un des occupants du véhicule, le conducteur ou le passager. L'angle de rotation θ4 du panneau central 8 par rapport à l'axe Z est avantageusement situé entre -60°et 60° voire -45° et 45°.

Avantageusement, au moins deux parmi les trois liaisons pivot 631, 632, 633 peuvent être mises en oeuvre dans une unique liaison rotule.

L'invention permet ainsi de résoudre différentes problématiques posées par les dispositifs d'affichage destinés aux planches de bord des véhicules automobiles.

Tout d'abord, en combinant dans un panneau central une large zone d'affichage, composée de deux écrans, et des aérateurs, l'invention permet d'optimiser l'espace central de la planche de bord. L'invention présente donc un bénéfice en termes d'aménagement de l'implantation des équipements sur la planche de bord.

Par ailleurs, la présence des deux écrans permet des modalités d'usage du dispositif d'affichage qui ne seraient pas possible avec un seul écran. En premier lieu l'invention permet un usage du dispositif d'affichage qui peut être différencié, entre le conducteur et le passager avant. Par exemple, le dispositif peut afficher les fonctions liées à la conduite sur l'écran situé du côté du conducteur, et les fonctions liées à un usage récréatif du côté du passager. Cette répartition peut notamment éviter que le conducteur ne soit gêné lorsque le passager utilise le dispositif d'affichage. Les deux écrans peuvent proposer des fonctions communes concernant par exemple des réglages de chauffage ou de climatisation. En complément ou alternativement, les deux écrans peuvent proposer des fonctions distinctes, par exemple un visionnage de film sur un écran et un affichage des données de navigation sur l'autre écran.

En outre, la présence d'un second écran permet d'utiliser l'un des écrans comme clavier tactile. Cette possibilité est d'autant plus intéressante que le dispositif d'affichage peut être orienté de sorte à positionner les écrans l'un au-dessus de l'autre, l'écran du bas faisant office de clavier, et l'écran du haut servant d'affichage tactile.

De plus, les multiples degrés de liberté du dispositif par rapport à la planche de bord améliorent grandement l'ergonomie des écrans.

En effet, ils offrent diverses possibilités au conducteur pour améliorer la visibilité et le confort visuel des écrans. En combinant leurs réglages, le conducteur peut orienter l'écran de sorte à minimiser la lumière sur l'écran et supprimer les reflets du soleil. Il peut également disposer l'écran de sorte à ce qu'il ne soit pas masqué par le volant du véhicule.

Pour les personnes de grande taille, dont l'assise est plus éloignée du tableau de bord, il est possible de rapprocher l'écran de l'utilisateur. Ce réglage est également utile dans une mode de conduite autonome lorsque les sièges sont reculés en limite de course arrière ou inclinés. En effet, l'amplitude des réglages proposés permet de s'adapter à toutes les positions des usagers, même très reculés en usage véhicule autonome.

L'invention n'est pas limitée aux modes de réalisations décrits ci-dessus et s'étend aux équivalents techniques.

En particulier l'ensemble du panneau formé par le bloc central et les écrans peut être légèrement tourné vers le conducteur, à des fins ergonomiques c'est-à-dire que le bloc central peut être préférentiellement dirigé vers le conducteur.

On peut également prévoir que l'ensemble du panneau constitué par le bloc central et les écrans mobiles soit pivotable autour d'un axe vertical de façon à choisir la meilleure disposition ergonomique pour le conducteur et les passagers, indépendamment du réglage rotatif propre de chaque écran par rapport au bloc central.

Dans un autre mode de réalisation de l'invention, la caméra peut également être disposée sur l'un des écrans mobiles, de façon à pouvoir pivoter en même temps que l'un des écrans.

Dans un autre mode de réalisation, la caméra peut être disposée en dehors du panneau constitué par le bloc central et les écrans.

## Revendications

1. Dispositif d'affichage (1) pour une planche de bord (2) d'un véhicule automobile (10) comprenant deux écrans (3, 4), notamment deux écrans tactiles, et un bloc central (5) de forme parallélépipédique allongée selon la direction sensiblement verticale et de faible épaisseur, le bloc central (5) comprenant au moins un aérateur (51), **caractérisé en ce que** les deux écrans se situent de part et d'autre du bloc central (5), chaque écran (3, 4) étant relié au bloc central (5) par une liaison de type charnière permettant un premier mouvement (RB) de rotation entre ledit écran (3, 4) et le bloc central (5).

2. Dispositif d'affichage (1) selon la revendication précédente, **caractérisé en ce que** le bloc central (5) comprend une caméra (52).

3. Dispositif d'affichage (1) selon l'une des revendications précédentes, **caractérisé en ce qu'**il comprend un deuxième élément de guidage selon un deuxième mouvement (RX), de rotation selon une direction longitudinale (X) du véhicule (10), de sorte à mettre en oeuvre deux formats d'affichage :
- un format paysage, dans lequel les écrans (3, 4) sont situés de part et d'autre d'un axe vertical (Z), et
- un format portrait, dans lequel les écrans (3, 4) sont situés de part et d'autre d'un axe horizontal (Y).

4. Dispositif d'affichage (1) selon la revendication précédente, **caractérisé en ce qu'**il comprend un élément (9) commandant un fonctionnement indépendant de chacun des écrans (3, 4), lorsque le dispositif est mis en place en format paysage.

5. Dispositif d'affichage (1) selon l'une des revendications 3 ou 4, **caractérisé en ce qu'**il comprend un élément (9) commandant l'affichage d'un clavier tactile sur l'écran inférieur (3, 4) permettant d'interagir avec l'écran supérieur (3, 4), lorsque le dispositif est mis en place en format portrait.

6. Dispositif d'affichage (1) selon l'une des revendications précédentes, **caractérisé en ce qu'**il comprend :
- un troisième élément de guidage selon un troisième mouvement (RY) de rotation selon une direction transversale (Y) du véhicule (10) et/ou,
- un quatrième élément de guidage selon un quatrième mouvement (RZ) de rotation selon une direction verticale (Z) du véhicule (10) et/ou,
- un cinquième élément de guidage selon un cinquième mouvement (TX) de translation selon une direction longitudinale (X) du véhicule (10).

7. Dispositif d'affichage (1) selon la revendication précédente, **caractérisé en ce que** l'amplitude du cinquième mouvement est telle qu'elle permet une utilisation du dispositif lorsque les sièges des utilisateurs du dispositif sont reculés en limite de course arrière, notamment ladite amplitude est au moins égale 100 millimètres, voire au moins égale à 150 millimètres.

8. Dispositif d'affichage (1) selon l'une des revendications précédentes, **caractérisé en ce que** les deux écrans tactiles (3, 4) sont de même taille.

9. Planche de bord (2) pour véhicule automobile comprenant un dispositif d'affichage selon l'une des revendications précédentes.

10. Véhicule automobile (10) comprenant un dispositif d'affichage selon l'une des revendications 1 à 8 et/ou une planche de bord selon la revendication précédente.

## Patentansprüche

1. Anzeigevorrichtung (1) für ein Armaturenbrett (2) eines Kraftfahrzeugs (10), bestehend aus zwei Bildschirmen (3, 4), insbesondere zwei Touchscreens, und einem quaderförmigen Mittelblock (5), der im Wesentlichen vertikal gestreckt und von geringer Dicke ist, wobei der Mittelblock (5) mindestens einen Luftrichter (51) aufweist, **dadurch gekennzeichnet, dass** die beiden Bildschirme auf beiden Seiten des Mittelblocks (5) angeordnet sind, wobei jeder Bildschirm (3, 4) durch eine Scharnierverbindung mit dem Mittelblock (5) verbunden ist, die eine erste Drehbewegung (RB) zwischen dem Schirm (3, 4) und dem Mittelblock (5) ermöglicht.

2. Anzeigevorrichtung (1) nach dem vorhergehenden Anspruch, **dadurch gekennzeichnet, dass** der Mittelblock (5) eine Kamera (52) aufweist.

3. Anzeigevorrichtung (1) nach einem der vorhergehenden Ansprüche, **dadurch gekennzeichnet, dass** sie ein zweites Führungselement für eine zweite Drehbewegung (RX) in Längsrichtung (X) des Fahrzeugs (10) aufweist, um zwei Anzeigeformate zu ermöglichen:
- ein Querformat, bei dem sich die Bildschirme (3, 4) auf beiden Seiten einer vertikalen Achse (Z) befinden, und
- ein Hochformat, bei dem sich die Bildschirme (3, 4) auf beiden Seiten einer horizontalen Achse (Y) befinden.

4. Anzeigevorrichtung (1) nach dem vorhergehenden Anspruch, **dadurch gekennzeichnet, dass** sie ein Element (9) aufweist, das einen unabhängigen Betrieb jedes der Bildschirme (3, 4) steuert, wenn die Vorrichtung im Querformat positioniert ist.

5. Anzeigevorrichtung (1) nach einem der Ansprüche 3 oder 4, **dadurch gekennzeichnet, dass** sie ein Element (9) aufweist, das die Anzeige einer berührungsempfindlichen Tastatur auf dem unteren Bildschirm (3, 4) steuert, die eine Interaktion mit dem oberen Bildschirm (3, 4) ermöglicht, wenn die Vorrichtung im Hochformat positioniert ist.

6. Anzeigevorrichtung (1) nach einem der vorhergehenden Ansprüche, **dadurch gekennzeichnet, dass** sie Folgendes aufweist:
- ein drittes Führungselement für eine dritte Drehbewegung (RY) in Querrichtung (Y) des Fahrzeugs (10) und/oder
- ein viertes Führungselement für eine vierte Drehbewegung (RZ) in vertikaler Richtung (Z) des Fahrzeugs (10) und/oder
- ein fünftes Führungselement für eine fünfte Translationsbewegung (TX) in Längsrichtung (X) des Fahrzeugs (10).

7. Anzeigevorrichtung (1) nach dem vorhergehenden Anspruch, **dadurch gekennzeichnet, dass** die Amplitude der fünften Bewegung so ist, dass sie die Verwendung der Vorrichtung ermöglicht, wenn die Sitze der Benutzer der Vorrichtung bis zur Grenze der Rückstellung zurück bewegt werden, wobei die Amplitude insbesondere mindestens 100 Millimeter beträgt oder mindestens 150 Millimeter.

8. Anzeigevorrichtung (1) nach einem der vorhergehenden Ansprüche, **dadurch gekennzeichnet, dass** die beiden Touchscreens (3, 4) gleich groß sind.

9. Armaturenbrett (2) für ein Kraftfahrzeug mit einer Anzeigevorrichtung nach einem der vorhergehenden Ansprüche.

10. Kraftfahrzeug (10) mit einer Anzeigevorrichtung nach einem der Ansprüche 1 bis 8 und/oder einem Armaturenbrett nach dem vorhergehenden Anspruch.

## Claims

1. Display device (1) for a dashboard (2) of a motor vehicle (10), comprising two screens (3, 4), in particular two touchscreens, and a central block (5) of parallelepipedal shape elongated in the substantially vertical direction and of small thickness, the central block (5) comprising at least one air vent (51), **characterized in that** the two screens are situated on either side of the central block (5), each screen (3, 4) being connected to the central block (5) by a hinge-type connection allowing a first rotational movement (RB) between said screen (3, 4) and the central block (5).

2. Display device (1) according to the preceding claim, **characterized in that** the central block (5) comprises a camera (52).

3. Display device (1) according to either of the preceding claims, **characterized in that** it comprises a second element for guiding with a second rotational movement (RX) about a longitudinal direction (X) of the vehicle (10), so as to implement two display formats:
- a landscape format, in which the screens (3, 4) are situated on either side of a vertical axis (Z), and
- a portrait format, in which the screens (3, 4) are situated on either side of a horizontal axis (Y).

4. Display device (1) according to the preceding claim, **characterized in that** it comprises an element (9) controlling an independent operation of each of the screens (3, 4) when the device is placed in landscape format.

5. Display device (1) according to either of Claims 3 and 4, **characterized in that** it comprises an element (9) controlling the display of a touch keypad on the lower screen (3, 4), allowing interaction with the upper screen (3, 4), when the device is placed in a portrait format.

6. Display device (1) according to one of the preceding claims, **characterized in that** it comprises:
- a third element for guiding with a third rotational movement (RY) about a transverse direction (Y) of the vehicle (10), and/or
- a fourth element for guiding with a fourth rotational movement (RZ) about a vertical direction (Z) of the vehicle (10), and/or
- a fifth element for guiding with a fifth translational movement (TX) in a longitudinal direction (X) of the vehicle (10).

7. Display device (1) according to the preceding claim, **characterized in that** the amplitude of the fifth movement is such that it allows use of the device when the seats of the users of the device are moved back to the limit of rearward travel, in particular said amplitude being at least equal to 100 millimetres, or even at least equal to 150 millimetres.

8. Display device (1) according to one of the preceding claims, **characterized in that** the two touch screens (3, 4) are of the same size.

9. Dashboard (2) for a motor vehicle, comprising a display device according to one of the preceding claims.

10. Motor vehicle (10) comprising a display device according to one of Claims 1 to 8 and/or a dashboard according to the preceding claim.
